# EUROPÄISCHE PATENTSCHRIFT

(11) **EP 3 344 634 B1**
(45) Veröffentlichungstag und Bekanntmachung des Hinweises auf die Patenterteilung: **02.10.2019**
(21) Anmeldenummer: 16748302.3
(22) Anmeldetag: 09.08.2016
(51) Int. Cl.: C07F 7/12, C08G 77/00

(54) **(METH)ACRYLATGRUPPEN AUFWEISENDE ORGANOSILICIUMVERBINDUNGEN UND EIN VERFAHREN ZU IHRER HERSTELLUNG**
ORGANOSILICON COMPOUNDS HAVING (METH)ACRYLATE GROUPS AND A PROCESS FOR PREPARATION THEREOF
COMPOSÉS ORGANOSILICIÉS PRÉSENTANT DES GROUPEMENTS (MÉTH)ACRYLATE ET PROCÉDÉ DE PRODUCTION DESDITS COMPOSÉS

(30) Priorität: 04.09.2015 DE 102015216951
(43) Veröffentlichungstag der Anmeldung: 11.07.2018
(73) Patentinhaber: Wacker Chemie AG, 81737 München (DE)
(72) Erfinder: FRITZ-LANGHALS, Elke, 85521 Ottobrunn (DE)
(74) Vertreter: Fritz, Helmut
(86) Internationale Anmeldenummer: PCT/EP2016/068945
(87) Internationale Veröffentlichungsnummer: WO 2017/036743

(56) Entgegenhaltungen:
- EP-A1- 1 544 232
- JP-A- H10 245 247
- PRASAD, KAVIRAYANI R. ET AL: "Enantioselective total synthesis of iso-cladospolide B, cladospolide C and cladospolide B from tartaric acid", TETRAHEDRON: ASYMMETRY , 22(5), 499-505 CODEN: TASYE3; ISSN: 0957-4166, 2011, XP002762536,

## Beschreibung

Die Erfindung betrifft (Meth)acrylatgruppen aufweisende Organosiliciumverbindungen, ein einfaches Verfahren zu ihrer Herstellung über (Meth)acrylat-funktionalisierte Chlorsilane und die (Meth)acrylat-funktionalisierten Chlorsilane.

(Meth)acrylatgruppen aufweisende Organosiliciumverbindungen spielen in weiten Bereichen der Technik eine wichtige Rolle. Über die (Meth)acrylatgruppen können beispielsweise Silicon-Materialien gehärtet werden. Solche Materialien werden u.a. für die Erzeugung abhäsiver Beschichtungen durch Strahlenhärtung benötigt. Die (Meth)acrylatgruppe kann außerdem mit weiteren (Meth)acrylaten beliebig copolymerisiert werden, so dass auf diese Weise neue Materialien mit maßgeschneiderten Eigenschaften zugänglich sind. Bei allen diesen Materialien spielt die Langzeitstabilität eine wichtige Rolle.

(Meth)acrylat-funktionelle Organosiliciumverbindungen sind bereits bekannt. In der Regel ist bei diesen die (Meth)acrylat-Gruppierung über einen Kohlenstoff-Spacer mit dem Siloxangerüst verknüpft. Diese Si-C-Verknüpfung wird stets über eine Edelmetall-katalysierte Addition von Si-H-Gruppen aufweisenden Organosiliciumverbindungen an Olefine, eine sogenannte Hydrosilylierung, erreicht. Die Einführung der (Meth)acrylat-gruppierung muss jedoch in einem nachfolgenden weiteren Schritt erfolgen, da sonst unerwünschte Nebenreaktionen unter Beteiligung der (Meth)acrylat-Doppelbindung auftreten. Die Si-C-verknüpften (Meth)acrylat-funktionellen Organosiliciumverbindungen können beispielsweise, wie in der US-4978726 beschrieben, dadurch hergestellt werden, dass zunächst Si-H-Gruppen enthaltende Organosiliciumverbindungen mit einem olefinischen Epoxid, z.B. Allylglycidylether, umgesetzt werden, und anschließend die (Meth)acrylat-Gruppierung durch Epoxid-Ringöffnung angebunden wird.
Ein weiteres in der US-4963438 beschriebenes Verfahren besteht darin, dass die Si-H-Gruppierung zunächst an einen olefinischen Alkohol, beispielsweise Allylalkohol, addiert wird und anschließend die Anknüpfung der (Meth)acrylat-Gruppierung durch Veresterung mit der Hydroxygruppe erfolgt.
Von Nachteil ist bei diesen Verfahren, dass sie jeweils einen Edelmetall-katalysierten und damit teuren Reaktionsschritt, die Hydrosilylierung, enthalten. Außerdem ist bei diesen Verfahren von Nachteil, dass die Anknüpfung der (Meth)acrylatgruppierung in einem nachgelagerten polymeranalogen Schritt erfolgen muss. Zudem sind insbesondere die Umsetzungen mit Acrylsäure mit der Bildung von Nebenprodukten behaftet, die aus dem Polymer nicht oder nur unter sehr hohem Aufwand entfernt werden können.

Nach beispielsweise US 4301268 und US 4306050 sind auch Si-O-C-verknüpfte (Meth)acrylat-funktionelle Polysiloxane bekannt, die durch Umsetzung von Chlorpolysiloxanen mit (Meth)acrylat-funktionellen Alkoholen hergestellt werden. Jedoch stehen Chlorpolysiloxane als großtechnische Produkte nicht zur Verfügung, da sie nur eine begrenzte Lagerstabilität aufweisen.

Wie in der DE 10359764 beschrieben, sind diese Verbindungen jedoch nicht hinreichend hydrolysestabil. Die Langzeit-Hydrolysestabilität der Linkergruppierung ist jedoch eine wichtige Voraussetzung für die Langzeitstabilität der Produkte und damit für ihre technische Anwendbarkeit.
Die bisher bekannten Si-O-C-verknüpften (Meth)acrylat-funktionellen Organosiliciumverbindungen sind insbesondere dann hydrolyselabil, wenn sie von der Synthese her Salze v.a. in Form von Chloriden enthalten.

Dieses Problem wird in der DE 10359764 und in der EP 1595909 dadurch gelöst, dass für die Synthese H-Siloxane und Acrylatfunktionelle Alkohole in Gegenwart einer Lewis-Säure als Katalysator zur Reaktion gebracht werden. Bei dieser Vorgehensweise ist jedoch von Nachteil, dass verhältnismäßig teure H-Siloxane eingesetzt werden müssen, und außerdem, dass bei der Umsetzung Wasserstoff gebildet wird, was aufwändige sicherheitstechnische Maßnahmen erfordert. Als Lewis-Säuren werden vorzugsweise sehr teure perfluorierte Organoborverbindungen eingesetzt, die aus dem Polymer aufgrund ihrer niedrigen Flüchtigkeit nicht mehr entfernt werden können, somit in den Endprodukten verbleiben und damit ein Umweltproblem darstellen.

EP1544232A1 offenbart die Umsetzung eines endständigen Si-H-funktionellen Siloxans mit 2-Hydroxyethylmethylacrylat (HEMA). Es wird ebenfalls die Verwendung der hierdurch erhaltenen Organopolysiloxane als strahlenhärtbare Beschichtungsmassen zur Herstellung adhäsiver Beschichtungen beschrieben. Weiterhin wird die Herstellung (Meth)acrylat-funktionalisierter Polysiloxane, die über ein Sauerstoffatom mit dem Silicium verknüpft sind, durch dehydrierende Verknüpfung eines Hydrid-funktionellen Siloxans mit einem Hydroxy-funktionellen Acrylat unter Verwendung von Lewissäuren, insbesondere perfluorierten Organoborverbindungen, als Katalysator offenbart. Dieses Dokument offenbart nicht, dass das an den Sauerstoff gebundene Kohlenstoffatom der (Meth)acrylat-funktionellen Organosiliciumverbindung mindestens einen weiteren über Kohlenstoff gebundenen Rest tragen kann, wobei bei Anwesenheit nur eines weiteren Restes dieser mehr als ein Kohlenstoffatom enthält.

Es besteht daher ein Bedarf an (Meth)acrylat-funktionellen Organosiliciumverbindungen, die auf einem einfachen und kostengünstigen Weg hergestellt werden können. Insbesondere sind Verbindungen von Interesse, die über einen hydrosilylierungsfreien Weg ohne Verwendung teurer Katalysatoren herstellbar sind. Eine weitere wichtige Anforderung für den technischen Einsatz ist, dass die (Meth)acrylat-funktionellen Organosiliciumverbindungen hydrolysestabil auch in Gegenwart von Verunreinigungen sind.

Gegenstand der Erfindung sind (Meth)acrylat-funktionelle Organosiliciumverbindungen M, bei denen die (Meth)acrylatgruppe über ein Sauerstoffatom mit dem Silicium der Organosiliciumverbindung verbunden ist, wobei das an das Sauerstoffatom gebundene Kohlenstoffatom mindestens einen weiteren über Kohlenstoff gebundenen Rest trägt, mit der Maßgabe, dass bei Anwesenheit nur eines weiteren Restes dieser mehr als ein Kohlenstoffatom enthält.

Überraschend wurde gefunden, dass diese (Meth)acrylat-funktionellen Organosiliciumverbindungen M auch in Gegenwart von Verunreinigungen hydrolysestabil sind.

Der Ausdruck (Meth)acrylat bedeutet Methacrylat, Acrylat oder ein Gemisch aus Methacrylat und Acrylat.

Vorzugsweise sind die (Meth)acrylat-funktionellen Organosiliciumverbindungen M aufgebaut aus mindestens einer Einheit der allgemeinen Formel I und mindestens einer Einheit der allgemeinen Formel II

**R²_{b}X_{c}SiO**_{[4}-(_{b+c})_{]/2} (I),

**R¹ₐSiO**₍₄₋ₐ)_{/2} (II),

wobei
- **R¹** und **R²**: unabhängig voneinander Wasserstoffatome oder unsubstituierte oder mit Substituenten, die ausgewählt werden aus -CN, N**R^{x}**₂, COOH, COO**R^{x}**, -Halogen, -Acryl, Methacryl,-Epoxy, -OH und -CON**R^{x}**₂ substituierten C₁-C₂₀ -Kohlenwasserstoffreste oder C₁-C₁₅ -Kohlenwasserstoffoxyreste, in denen jeweils eine oder mehrere, einander nicht benachbarte Methyleneinheiten durch Gruppen -O-, -CO-, -COO-, -OCO- oder -OCOO oder **NR^{x}** ersetzt sein können,
- **R^{x}**: Wasserstoff oder einen unsubstituierten oder mit Substituenten, die ausgewählt werden aus -CN und Halogen, substituierten C₁-C₁₀ - Kohlenwasserstoffrest,
- **X**: einen über Sauerstoff gebundenen Rest der allgemeinen Formel (III)

**O-C(R³R⁴)-R⁵-O-(C=O)-CR⁶=CH₂)** (III)
- **R³** und **R⁴**: unabhängig voneinander Wasserstoff oder C₁-C₂₀ -Kohlenwasserstoffreste, in denen jeweils eine oder mehrere, einander nicht benachbarte Methyleneinheiten durch Gruppen O-(C=O)-C**R**⁶=CH₂, -O-, -CO-, -COO-, -OCO- oder -OCOO- oder **NR^{x}** ersetzt sein können, mit der Maßgabe, dass wenn **R³** Wasserstoff bedeutet, **R⁴** mindestens zwei Kohlenstoffatome enthält,
- **R⁵**: zweiwertiger C₁-C₂₀-Kohlenwasserstoffrest, in dem jeweils eine oder mehrere, einander nicht benachbarte Methyleneinheiten durch Gruppen -O-, -CO-, -COO-, -OCO- oder -OCOO- oder **NR^{x}** ersetzt sein können,
- **R⁶**: Wasserstoff oder unverzweigte, verzweigte oder cyclische gesättigte oder ungesättigte Alkylgruppe mit 1 bis 12 C-Atomen oder Arylgruppe oder Aralkylgruppe, wobei einzelne nicht benachbarte Methyleneinheiten durch Stickstoffatome oder Sauerstoffatome ersetzt sein können,
- **a**: die Werte 0, 1, 2 oder 3,
- **b**: die Werte 0, 1 oder 2,
- **c**: die Werte 1, 2 oder 3 und
- **b+c**: 1, 2 oder 3 bedeuten.

**R¹** und **R²** weisen vorzugsweise im Gerüst 1 bis 12 Atome, insbesondere 1 bis 6 Atome, vorzugsweise nur Kohlenstoffatome oder ein Alkoxysauerstoffatom und sonst nur Kohlenstoffatome sowie Wasserstoffatome auf. Vorzugsweise sind **R¹** und **R²** geradkettige, verzweigte oder cyclische C₁-C₆-Alkyl- oder Alkoxyreste. Besonders bevorzugt sind die Reste Methyl, Ethyl, Phenyl, Vinyl, Trifluorpropyl, Methoxy, Ethoxy und i-Propoxy. Die Reste **R¹** und **R²** können am selben Siliciumatom gleich oder verschieden sein.

**R³** und **R⁴** weisen vorzugsweise 1 bis 12 Kohlenstoffatome, insbesondere 1 bis 6 Kohlenstoffatome, vorzugsweise nur Kohlenstoffatome oder Sauerstoffatome oder nur Kohlenstoffatome auf. Wenn **R³** ein Wasserstoffatom ist, dann muss **R⁴** mindestens zwei Kohlenstoffatome aufweisen. Vorzugsweise sind **R³** und **R⁴** geradkettige, verzweigte oder cyclische C₁-C₆-Alkylreste oder Arylreste, die eine oder mehrere weitere (Meth)acrylatgruppierungen enthalten können. besonders bevorzugt sind die Reste Methyl, Ethyl und (Meth)acryloxymethyl.
Insbesondere bevorzugt sind die beiden Reste **R³** und **R⁴** jeweils Methyl.

Der Rest **R⁵** ist vorzugsweise ein zweiwertiger C-gebundener C₁-C₆-Kohlenwasserstoffrest, bei dem nicht benachbarte Methylengruppen durch Sauerstoffe ersetzt sein können. Vorzugsweise ist **R⁵** ein geradkettiger oder verzweigter Alkylenrest. Besonders bevorzugt sind die Alkylenreste Methylen, Ethylen, Propylen oder Butylen.

Bevorzugt ist **R⁶** Wasserstoff oder unverzweigte, verzweigte oder cyclische gesättigte oder ungesättigte Alkylgruppe mit 1 bis 6 C-Atomen oder Arylgruppe.
Besonders bevorzugt ist **R⁶** Wasserstoff oder C₁-C₅ Alkylgruppe, Ganz besonders bevorzugt sind **R⁶** Wasserstoff.

Vorzugsweise bedeutet c den Wert 1.

Die Meth)acrylat-funktionellen Organosiliciumverbindungen M können linear, verzweigt, cyclisch, bicyclisch, tricyclisch oder polycyclisch sein. Es kann sich um Öle, Harze oder Partikel handeln.

Vorzugsweise enthalten die (Meth)acrylat-funktionellen Organosiliciumverbindungen M 1 bis 20, insbesondere 2 bis 10 Einheiten der allgemeinen Formel I. Vorzugsweise enthalten die (Meth)acrylat-funktionellen Organosiliciumverbindungen 1 bis 500, besonders bevorzugt 4 bis 200, insbesondere 10 bis 100 Einheiten der allgemeinen Formel II.

Vorzugsweise bedeutet bei mindestens 90 %, insbesondere bei mindestens 95 % der Einheiten der allgemeinen Formel II **a** den Wert 2.

Beispiele für Gruppierungen **X** sind:
O-C(CH₃)₂-CH₂-O-(C=O)-CH=CH₂
O-C(CH₃)₂-CH(CH₃)-O-(C=O)-CH=CH₂
O-C(CH₃)₂-CH₂-CH₂-O-(C=O)-CH=CH₂
O-C(CH₃)₂-CH₂-CH(CH₃)-O-(C=O)-CH=CH₂
O-CH(C₂H₅)-CH₂-O-(C=O)-CH=CH₂
O-CH[CH₂-O-(C=O)-CH=CH₂]₂

Ein weiterer Gegenstand der Erfindung ist ein Verfahren zur Herstellung der (Meth)acrylat-funktionalisierten Organosiliciumverbindungen M aufgebaut aus mindestens einer Einheit der allgemeinen Formel I und keiner oder mindestens einer Einheit der allgemeinen Formel II

**R²_{b}X_{c}SiO**_{[4-(b+c)]/2} (I),

**RₐSiO**_{(4-a)/2} (II),

bei dem (Meth)acryloyl-funktionalisierte Chlorsilane der allgemeinen Formel IV

**R²_{b}X_{c}SiCl**_{[4-(b+c)]} (IV)

mit Hydroxy-funktionalisierten Organosiliciumverbindungen umgesetzt werden,
wobei **R¹, R², X**, **a**, **b** und **c** die vorstehenden Bedeutungen und bevorzugten Bedeutungen aufweisen.

Ein weiterer Gegenstand der Erfindung ist ein Verfahren zur Herstellung der (Meth)acrylat-funktionalisierten Chlorsilane der allgemeinen Formel IV

**R²_{b}X_{c}SiCl**_{[4-(b+c)]} (IV),

bei dem (Meth)acryloyl-funktionalisierte Alkohole der allgemeinen Formel V

**HO-C(R³R⁴)-R⁵-O-(C=O)-CR⁶=CH₂** (V)

mit Chlorsilanen der allgemeinen Formel VI

**R²_{b}SiCl**_{[4-b]} (VI)

umgesetzt werden,
wobei **R², R**³, **R⁴**, **R⁵, R⁶, X**, **b** und **c** die vorstehenden Bedeutungen und bevorzugten Bedeutungen aufweisen.

Ein weiterer Gegenstand der Erfindung sind auch (Meth)acryloylfunktionalisierte Chlorsilane der allgemeinen Formel IV

**R²_{b}X_{c}SiCl**_{[4-(b+c)]} (IV)

wobei **R², X**, **b** und **c** die vorstehenden Bedeutungen und bevorzugten Bedeutungen aufweisen.

Die (Meth)acrylat-funktionalisierten Organosiliciumverbindungen M können so aus großtechnisch verfügbaren Organosiliciumverbindungen wie Hydroxypolysiloxanen oder Hydroxypolysiloxanen im Gemisch mit Siloxancyclen unter Verwendung der (Meth)acryloyl-funktionalisierten Chlorsilane der allgemeinen Formel IV hergestellt werden.

Für die (Meth)acrylat-funktionalisierten Organosiliciumverbindungen M existierte bislang kein technisch geeignetes einfaches Herstellverfahren.
Die EP 1544232 beschreibt die Herstellung (Meth)acrylatfunktionalisierter Polysiloxane, die über ein Sauerstoffatom mit dem Silicium verknüpft sind, durch dehydrierende Verknüpfung eines Hydrid-funktionellen Siloxans und eines Hydroxy-funktionellen Acrylats unter Verwendung von Lewis-Säuren, insbesondere perfluorierten Organoborverbindungen als Katalysatoren. Bei diesem Syntheseweg wird ein sehr teurer Katalysator verwendet, der aus dem Produkt nicht entfernt werden kann. Die Bildung von Wasserstoff bei der Umsetzung stellt darüber hinaus auch hohe sicherheitstechnische Anforderungen.

Die Schriften US 4301268 und US 4306050 beschreiben außerdem die Herstellung Si-O-C-verknüpfter (Meth)acrylat-funktioneller Polysiloxane durch Umsetzung von Chlorpolysiloxanen mit (Meth)acrylat-funktionellen Alkoholen. Jedoch stehen Chlorpolysiloxane als großtechnische Produkte nicht zur Verfügung, da sie nur eine begrenzte Lagerstabilität aufweisen.

Es besteht daher auch ein Bedarf an einem einfachen und kostengünstigen Verfahren zur Herstellung von (Meth)acrylat-funktionellen Si-O-C-verknüpften Organosiliciumverbindungen. Insbesondere von Vorteil wäre ein Verfahren, bei dem großtechnisch in stabiler Form zur Verfügung stehende Organosiliciumverbindungen, beispielsweise Hydroxypolysiloxane oder Hydroxypolysiloxane im Gemisch mit Siloxancyclen, eingesetzt werden könnten.

Es wurde überraschend gefunden, dass sich die (Meth)acrylat-funktionellen Si-O-C-verknüpften Organosiliciumverbindungen M leicht aus (Meth)acryloyloxy-funktionalisierten Chlorsilanen herstellen lassen. Diese sind sehr leicht zugänglich aus den (Meth)acryloyloxy-funktionellen Alkoholen und Alkylchlorsilanen.

Die eingesetzten (Meth)acrylat-funktionellen Alkohole der allgemeinen Formel V können in einer der Fachkraft bekannten Weise hergestellt werden, beispielsweise durch Veresterung von Di- oder Polyolen und (Meth)acrylsäurechlorid in Gegenwart einer Base, z.B. Triethylamin oder durch azeotrope Veresterung von Diolen mit (Meth)acrylsäure. Wenn zwei oder mehrere chemisch identische Hydroxygruppen vorliegen, kann der Umsetzungsgrad durch die Menge an (Meth)acrylsäure oder (Meth)acrylsäurechlorid bezogen auf die Anzahl der vorhandenen Hydroxygruppen gesteuert werden. Bei Di- oder Polyolen mit chemisch unterschiedlichen Hydroxygruppen erfolgt die Veresterung i.A. regioselektiv bevorzugt an der sterisch weniger gehinderten Position, d.h. beispielweise an einer primären oder sekundären Alkoholgruppierung bevorzugt gegenüber einer tertiären Alkoholgruppierung.
Beispiele für die bei der Herstellung der (Meth)acryloylfunktionalisierten Alkohole der allgemeinen Formel V bevorzugt eingesetzten Alkohole sind 2-Methyl-1,2-propandiol, 2-Methyl-2,3-butandiol, 3-Methyl-1,3-butandiol, 2-Methyl-2,4-pentandiol, 1,2-Butandiol und Glycerin.

Eine weitere mögliche Darstellungsmethode für die (Meth)acrylat-funktionellen Alkohole V ist die Ringöffnung von Epoxiden mit (Meth)acrylsäure oder deren Salzen, beispielsweise die Umsetzung 2,2-Dimethylethylenoxid mit Acrylsäure, die in der WO 2013096587 beschrieben ist.

Die Umsetzung der (Meth)acrylat-funktionellen Alkohole der allgemeinen Formel V mit Chlorsilanen der allgemeinen Formel VI zu den (Meth)acrylat-funktionellen Chlorsilanen der allgemeinen Formel IV kann als Batch-Reaktion, als Semi-Batch-Reaktion oder kontinuierlich erfolgen.

Vorzugsweise wird das Chlorsilan der allgemeinen Formel VI vorgelegt, gegebenenfalls in einem inerten Lösemittel, und der (Meth)acrylat-funktionelle Alkohol der allgemeinen Formel V, ebenfalls gegebenenfalls in einem inerten Lösemittel, zudosiert.
Als inerte Lösemittel können beispielsweise Toluol, Methyl-tert.-butylether, Dichlormethan, Cyclohexan oder deren Gemische eingesetzt werden. Der Anteil an inertem Lösemittel beträgt bevorzugt mindestens 5 Gew. % und höchstens 1000 Gew. %, vorzugsweise mindestens 20 Gew. % und höchstens 300 Gew.%, besonders bevorzugt mindestens 50 Gew. % und höchstens 200 Gew. %, bezogen auf die Reaktionsmasse aus der allgemeinen Formel Chlorsilan VI und (Meth)acrylat-funktionellem Alkohol der allgemeinen Formel V ohne Solvens.

Der (Meth)acrylat-funktionelle Alkohol der allgemeinen Formel V wird bevorzugt im molaren Unterschuss bezogen auf alle im Chlorsilan der allgemeinen Formel VI vorhandenen Chlorgruppierungen eingesetzt, so dass mindestens eine Si-Cl-Einheit nach der Umsetzung vorhanden ist.
Beispielsweise werden bei Tetrachlorsilan bevorzugt mindestens 0,8 und höchstens 3,3 Äquivalente, besonders bevorzugt mindestens 1,0 und höchstens 2,2 Äquivalente an (Meth)acrylat-funktionellem Alkohol der allgemeinen Formel V eingesetzt, bei Trichlorsilanen bevorzugt mindestens 0,8 und höchstens 2,2 Äquivalente, besonders bevorzugt mindestens 1,0 und höchstens 1,2 Äquivalente,
bei Dichlorsilanen bevorzugt mindestens 0,8 und höchstens 1,3 Äquivalente, bevorzugt mindestens 0,9 und höchstens 1,2 Äquivalente.
Vorzugsweise erfolgt die Umsetzung zur Bindung des gebildeten Chlorwasserstoffs in Gegenwart einer Base, bevorzugt in Gegenwart von Ammoniak oder einer organischen Aminbase, beispielsweise Triethylamin oder Tributylamin.
Die Base wird vorzugsweise dem (Meth)acrylat-funktionellen Alkohol der allgemeinen Formel V zugesetzt. Eine weitere Möglichkeit ist, die Base getrennt zuzudosieren.
Die Base wird bevorzugt in Anteilen von mindestens 0,8 Äquivalenten und höchstens 1,3 Äquivalenten, besonders bevorzugt in Anteilen von mindestens 0,9 Äquivalenten und höchstens 1,2 Äquivalenten, bezogen auf die Alkoholgruppierung des eingesetzten (Meth)acrylat-funktionellen Alkohols der allgemeinen Formel V, eingesetzt.

Die Reaktionszeit beträgt bevorzugt mindestens 1 min. und höchstens 50 Std., besonders bevorzugt mindestens 30 Min. und höchstens 20 Stunden, insbesondere besonders bevorzugt mindestens 1 Std. und höchstens 10 Std..
Die Umsetzung wird bevorzugt bei Temperaturen zwischen 0 und 180°C, besonders bevorzugt zwischen 20 und 120°C, und Drucken bevorzugt zwischen 100 mbar und 10 bar, besonders bevorzugt zwischen 1 und 5 bar durchgeführt.

Die erhaltenen (Meth)acrylat-funktionellen Chlorsilane der allgemeinen Formel IV werden mit Hydroxy-funktionellen Siloxanen zu den (Meth)acrylat-funktionellen Polysiloxanen M umgesetzt.

Diese Umsetzung kann als Batch-Reaktion, als Semi-Batch-Reaktion oder kontinuierlich erfolgen.

Vorzugsweise wird das Hydroxy-funktionelle Siloxan vorgelegt, gegebenenfalls in verdünnter Form, und das (Meth)acrylatfunktionelle Chlorsilan IV ebenfalls gegebenenfalls in verdünnter Form, zudosiert.
Zur Verdünnung können beispielsweise inerte Lösemittel wie Toluol, Methyl-tert.-butylether, Dichlormethan, Cyclohexan oder deren Gemische eingesetzt werden. Der Anteil an inertem Lösemittel beträgt bevorzugt mindestens 5 Gew. % und höchstens 1000 Gew. %, vorzugsweise mindestens 20 Gew. % und höchstens 300 Gew.%, besonders bevorzugt mindestens 50 Gew. % und höchstens 200 Gew. %, bezogen auf das eingesetzte Hydroxypolysiloxan.

Das (Meth)acrylat-funktionelle Chlorsilan der allgemeinen Formel IV wird bevorzugt in molaren Anteilen von mindestens 0,2 Äquivalenten und höchstens 3,0 Äquivalenten, bevorzugt 0,8 Äquivalenten und höchstens 2 Äquivalenten, besonders bevorzugt mindestens 1,0 Äquivalenten und höchstens 1,3 Äquivalenten bezogen auf die im Hydroxypolysiloxan vorhandenen Hydroxygruppen eingesetzt.

Vorzugsweise erfolgt die Umsetzung zur Bindung des gebildeten Chlorwasserstoffs in Gegenwart einer Base, bevorzugt in Gegenwart von Ammoniak, einer organischen Aminbase, oder einem Alkali-, Erdalkali- oder Erdmetallcarbonat, -hydrogencarbonat oder -hydroxid. Beispiele für verwendete Basen sind Kaliumcarbonat, Natriumcarbonat, Calciumcarbonat, Natriumhydroxid, Kaliumhydroxid, Ammoniak, Triethylamin oder Tributylamin.
Die Base wird vorzugsweise dem Hydroxypolysiloxan zugesetzt.

Eine weitere Möglichkeit ist, die Base getrennt zuzudosieren. Die Base wird bevorzugt in Anteilen von mindestens 0,8 Äquivalenten und höchstens 1,3 Äquivalenten, besonders bevorzugt in Anteilen von mindestens 0,9 Äquivalenten und höchstens 1,2 Äquivalenten, bezogen auf die vorhandenen Chlorsilangruppierungen, eingesetzt.

Die Reaktionszeit beträgt bevorzugt mindestens 10 min. und höchstens 200 Std., besonders bevorzugt mindestens 1 Std. und höchstens 100 Stunden, insbesondere besonders bevorzugt mindestens 1 Std. und höchstens 70 Std.

In einer besonderen, für (Meth)acrylat-funktionelle Monochlorsilane der allgemeinen Formel IV mit b + c = 3 bevorzugten Ausführungsform werden diese mit Wasser in die entsprechenden Disiloxane der allgemeinen Formel Formel I mit b + c = 3 überführt:

**2 R²_{b}X_{c}SiCl + H₂O ⇒ R²_{b}X_{c}Si-O-SiXR²_{b} + 2 HCl**

welche dann mit endständig Hydroxy-funktionalisierten Organosiliciumverbindungen oder Siloxancyclen oder Gemische aus diesen in einer Äquilibrierungsreaktion zu den entsprechenden (Meth)acrylat-funktionellen Polysiloxanen M umgesetzt werden.

Die Umsetzung mit Wasser erfolgt hierbei zur Neutralisation der gebildeten Salzsäure bevorzugt in Gegenwart einer Base, bevorzugt in Gegenwart eines Alkali- oder Erdalkalimetallhydrogencarbonats, -carbonats oder -hydroxids, oder in Gegenwart von Ammoniak.

Das Chlorsilan wird bevorzugt mit mindestens 0,5 Äquivalenten Wasser und höchstens 100 Äquivalenten Wasser, besonders bevorzugt mit mindestens 1 Äquivalent Wasser und höchstens 30 Äquivalenten Wasser bei Temperaturen zwischen mindestens 0 und höchstens 180°C, besonders bevorzugt zwischen mindestens 20 und höchstens 120°C, und Drucken bevorzugt zwischen mindestens 10 mbar und höchstens 10 bar, besonders bevorzugt zwischen mindestens 100 mbar und höchstens 2 bar umgesetzt.

Das erhaltene Disiloxan kann vor der weiteren Umsetzung mit dem Hydroxy-funktionellen Polysiloxan ohne weitere Reinigung eingesetzt oder aber auch gereinigt werden. Zur Reinigung wird überschüssiges Wasser aus dem Rohprodukt entfernt, gegebenenfalls durch Destillation oder Extraktion des Produkts mit einem inerten Lösemittel, gegebenenfalls werden gebildete Salze abgetrennt, gegebenenfalls durch Extraktion mit Wasser, durch Filtration oder durch Destillation des Lösemittels.
Die Umsetzung mit dem Hydroxy-funktionellen Polysiloxan oder mit Siloxancyclen, eine sogenannte Äquilibrierungsreaktion, kann in einer der Fachkraft bekannten Weise durchgeführt werden.

Alle vorstehenden Symbole der vorstehenden Formeln weisen ihre Bedeutungen jeweils unabhängig voneinander auf. In allen Formeln ist das Siliciumatom vierwertig.
In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1 (nicht erfindungsgemäß)

### (Synthese der Vorstufe 2-Hydroxy-2-methylpropylacrylat)

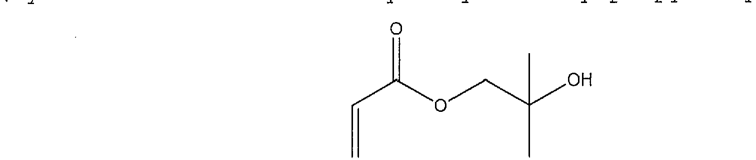

Unter Inertgas wurden Triethylamin (66.8 g, 91.5 mL, 0.66 mol, 1.2 Eq.) und 2-Methylpropan-1,2-diol (49.6 g, 0.55 mol, 1 Eq.) in 300 mL Dichlormethan vorgelegt und mit einem Eisbad auf 0 °C gekühlt. Über einen Tropftrichter wurde eine Lösung aus 200 mL Dichlormethan und Acrylsäurechlorid (49.8 g, 44.5 mL, 0.55 mol, 1 Eq.) innerhalb von einer Stunde bei Raumtemperatur zugetropft. Dabei bildete sich allmählich ein farbloser Niederschlag. Die Reaktionslösung wurde über Nacht auf Raumtemperatur erwärmt und anschließend der entstandene Niederschlag abfiltriert. Die Reaktionslösung wurde zweimal mit jeweils 100 mL Wasser gewaschen und über MgSO₄ getrocknet. Anschließend wurde das Lösemittel am Rotationsverdampfer entfernt und das Rohprodukt im Vakuum destilliert. Sdp. 43 - 44 °C / 7.7 - 8.4 10⁻¹ mbar. Man erhielt 50,7 g (71 %) des reinen Produkts als farblos-klare Flüssigkeit, Lagerung bei 7°C, stabilisiert mit 4-Methoxyphenol.
¹H-NMR (CDCl₃): δ= 1.21(s, 6H, CH₃), 2.30 (br s, 1H, OH), 3.99 (s, 2H, CH₂), 5.81 (dd, ³*J*_{H,H} = 10.5 Hz, 1.5 Hz, 1H) 6.12 (dd, ³*J*_{H,H} = 10.5 Hz, 1,7 Hz, 1H), 6.39 ppm (dd, ³*J*_{H},_{H} = 1.5 Hz, 17 Hz, 1H) .
¹³C-NMR (CDCl₃) : δ = 26.05 (2C, CH₃), 69.72 (1C, *C*OH), 72.01 (1C, *C*H₂), 127.99 (1C, H*C*=CH₂), 131.19 (1C, HC=*C*H₂), 166.08 ppm (1C, RO*C*=O).

### Beispiel 2: [(Chlordimethylsilyl)-oxy)]-2-methylpropylacrylat (Formel III, R² = R³ = R⁴ = Me, R⁵ = CH₂, R⁶ = H, b = 2, c = 1)

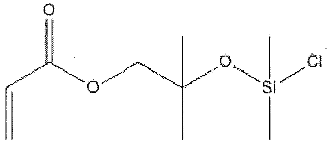

22.4 g (0.17 Mol) Dichlordimethylsilan wurden unter Argon im Kolben vorgelegt. 5,00 g (35 mMol) 2-Hydroxy-2-methylpropylacrylat, 4,05 g Triethylamin (40 mMol) und 10 ml trockener Methyl-tert-butylether wurden unter Argon gemischt und unter Eiskühlung innerhalb einer Stunde zu Dichlordimethylsilan getropft. Nach einer Reaktionszeit von 2 Stunden wurde das Eisbad entfernt und die Reaktion bei Raumtemperatur über Nacht weitergeführt. Nach vollständiger Umsetzung wurde das Rohprodukt destilliert. Man erhält 5,8 g (71 %) einer klaren farblosen Flüssigkeit mit Sdp. 41 - 44 °C / 0,41 mbar. Stabilisierung durch Zugabe von 4-Methoxyphenol und Lagerung bei 4 °C im Kühlschrank.
¹H-NMR (CDCl₃) : δ= 0.296 (s, 6H, (CH₃)₂SiCl), 1.21 (s, 6H, CH₃), 3.89 (s, CH₂), 5.69 (dd, *J*_{H},_{H} = 10.5 Hz, 1.5 Hz, 1H), 6,00 (dd, *J*_{H},_{H} = 10.5 Hz, 17.5 Hz, 1H), 6.28 ppm (dd, *J*_{H},_{H} = 1.5 Hz, 17.5 Hz, 1H).
¹³C-NMR (CDCl₃) : δ = 4.57 (2C, Si (CH3)₂Cl), 26.79 (2C, CH₃), 71.53 (1C, CH₂), 75.21 (1C, C(CH₃)₂), 128.28 (1C, HC=CH₂), 130.97 (1C, HC=CH₂), 165.84 ppm (1C, ROC=O).
²⁹Si-NMR (CDCl₃) δ = 4.88 ppm ((CH₃)₂SiCl).

### Beispiel 3: Acrylat-funktionelles Polysiloxan

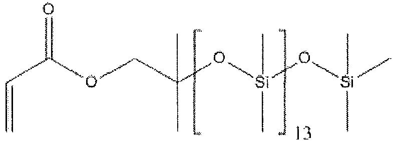

138 g (0.141 Mol) eines endständig mit einer Hydroxygruppe funktionalisierten Polysiloxans (MG 980, Kettenlänge n = 13) wurden mit 150 ml Methyl-tert.-butylether verdünnt und mit 17,1 g (0,169 mmol) Triethylamin versetzt. Unter Argon wurden unter Rühren 40.0 g (0.169 Mol) [(Chlordimethylsilyl)-oxy)]-2-methylpropylacrylat (Formel III, R² = R³ = R⁴ = Me, R⁵ = CH₂, R⁶ = H, b = 2, c = 1)zugegeben und die Mischung 72 Std. bei Raumtemperatur unter Lichtausschluss gerührt. Das gebildete als Feststoff anfallende Ammoniumsalz wurde abfiltriert. Die organische Phase wurde eingedampft und an einem Kurzwegverdampfer bei 70°C / 4,2·10⁻² mbar entflüchtigt. Ausbeute 134 g (85.1 %).
¹H-NMR (CDCl₃) : δ= 0.025 - 0.150 (m, 72 H, Si (C*H*₃)₂), 1.29 (s, 6H, CH₃), 3.99 (s, 2H, CH₂), 5.81 (dd, *J*_{H},_{H} = 10 Hz, 1.5 Hz, 1H), 6.13 (dd, *J*_{H},_{H} = 10 Hz, 17 Hz, 1H), 6.41 ppm (dd, *J*_{H},_{H} = 1.5 Hz, 17.5 Hz, 1H).
¹³C-NMR (CDCl₃) : δ = 1.04 - 1.13 (m, Si(CH₃)₂), 1.70 - 1.81 (m, Si(CH₃)₂), 26.97 (2C, CH₃), 72.16 (1C, CH₂), 72.91 (1C, CH₂C(CH₃)₂), 128.53 (1C, HC=CH₂), 130.64 (1C, HC=CH₂), 165.99 ppm (1C, ROC=O).
²⁹Si-NMR (CDCl₃) : δ= -22.07 - -21.93 (11 Si, (CH₃)Si), -21.39 (1Si, (CH₃)₃SiOSi(CH₃)₂), -18.71 (1 Si, (CH₃)₂COSi(CH₃)₂O), 7.25 ppm (1 Si, (CH₃)₃Si).

### Beispiel 4: Stabilität des Acrylat-funktionellen Polysiloxans aus Beispiel 3 in Wasser

0,7 ml des Acrylat-funktionellen Polysiloxans aus Beispiel 3 wurden mit 0,9 ml Wasser insgesamt 8 Tage bei Raumtemperatur gerührt und die beiden Phasen getrennt NMR-spektroskopisch untersucht. Es erfolgte keine nachweisbare hydrolytische Spaltreaktion.

### Beispiel 5: Nicht erfindungsgemäßes nicht-wasserstabiles Acrylat

0,78 g Acrylat-funktionelles Polysiloxan mit der Formel (CH₃)₃Si-O-[Si(CH₃)₂-O]₁₁-Si(CH₃)₂-O-CH₂-CH₂-OCO-CH=CH₂ und 0,9 g Wasser wurden bei Raumtemperatur 2 Std. gerührt und die Polymerphase ¹H-NMR-spekroskopisch unter Zugabe von Trichloracetylisocyanat als Derivatisierungsreagens für Si-OH Gruppen untersucht. Es konnte die Bildung von 20 Mol % Si-OH Kettenenden nachgewiesen werden.

## Patentansprüche

1. (Meth)acrylat-funktionelle Organosiliciumverbindungen M, bei denen die (Meth)acrylatgruppe über ein Sauerstoffatom mit dem Silicium der Organosiliciumverbindung verbunden ist, wobei das an das Sauerstoffatom gebundene Kohlenstoffatom mindestens einen weiteren über Kohlenstoff gebundenen Rest trägt, mit der Maßgabe, dass bei Anwesenheit nur eines weiteren Restes dieser mehr als ein Kohlenstoffatom enthält,
aufgebaut aus mindestens einer Einheit der allgemeinen Formel I und mindestens einer Einheit der allgemeinen Formel II
**R²_{b}X_{c}SiO**_{[4-(b+c)]/2} (I),
**R¹ₐSiO**_{(4.a)/2} (II),
wobei
**R¹** und **R²** unabhängig voneinander Wasserstoffatome oder unsubstituierte oder mit Substituenten, die ausgewählt werden aus -CN, **NR^{x}₂,** COOH, COO**R^{x}**, -Halogen, -Acryl, Methacryl,-Epoxy, -OH und -CON**R**^{x}₂ substituierten C₁-C₂₀ -Kohlenwasserstoffreste oder C₁-C₁₅ -Kohlenwasserstoffoxyreste, in denen jeweils eine oder mehrere, einander nicht benachbarte Methyleneinheiten durch Gruppen -O-, -CO-, -COO-, -OCO- oder. -OCOO oder **NR^{x}** ersetzt sein können,
**R^{x}** Wasserstoff oder einen unsubstituierten oder mit Substituenten, die ausgewählt werden aus -CN und Halogen, substituierten C₁-C₁₀ - Kohlenwasserstoffrest,
**X** einen über Sauerstoff gebundenen Rest der allgemeinen Formel (III)
**O-C(R³R⁴)-R⁵-O-(C=O)-CR⁶=CH₂)** (III)
**R³** und **R⁴** unabhängig voneinander Wasserstoff oder C₁-C₂₀ -Kohlenwasserstoffreste, in denen jeweils eine oder mehrere, einander nicht benachbarte Methyleneinheiten durch Gruppen O-(C=O)-C**R**⁶=CH₂, -O-, -CO-, -COO-, -OCO- oder -OCOO- oder **NR^{x}** ersetzt sein können, mit der Maßgabe, dass wenn **R³** Wasserstoff bedeutet, **R⁴** mindestens zwei Kohlenstoffatome -enthält,
**R⁵** zweiwertiger C₁-C₂₀-Kohlenwasserstoffrest, in dem jeweils eine oder mehrere, einander nicht benachbarte Methyleneinheiten durch Gruppen -O-, -CO-, -COO-, -OCO- oder -OCOO- oder **NR^{x}** ersetzt sein können,
**R⁶** Wasserstoff oder unverzweigte, verzweigte oder cyclische gesättigte oder ungesättigte Alkylgruppe mit 1 bis 12 C-Atomen oder Arylgruppe oder Aralkylgruppe, wobei einzelne nicht benachbarte Methyleneinheiten durch Stickstoffatome oder Sauerstoffatome ersetzt sein können,
**a** die Werte 0, 1, 2 oder 3,
**b** die Werte 0, 1 oder 2,
**c** die Werte 1, 2 oder 3 und
**b+c** 1, 2 oder 3 bedeuten.

2. (Meth)acrylat-funktionelle Organosiliciumverbindungen M nach Anspruch 1, bei denen **R¹** und **R²** geradkettige, verzweigte oder cyclische C₁-C₆-Alkyl- oder Alkoxyreste, oder Phenyl- oder Vinylreste sind.

3. (Meth)acrylat-funktionelle Organosiliciumverbindungen M nach einem oder mehreren der Ansprüche 1 oder 2, bei denen **R³** und **R⁴** ausgewählt werden aus Methyl, Ethyl und (Meth)acryloxymethyl.

4. (Meth)acrylat-funktionelle Organosiliciumverbindungen M nach einem oder mehreren der Ansprüche 1 bis 3, bei denen **R⁵** ein zweiwertiger C-gebundener C₁-C₆-Kohlenwasserstoffrest bedeutet, bei dem nicht benachbarte Methylengruppen durch Sauerstoffe ersetzt sein können.

5. Verfahren zur Herstellung von (Meth)acrylat-funktionalisierten Organosiliciumverbindungen M gemäß einem oder mehreren der Ansprüche 1 bis 4, aufgebaut aus mindestens einer Einheit der allgemeinen. Formel I und keiner oder mindestens einer Einheit der allgemeinen Formel II
**R_{b}X_{c}SiO**_{[4-(b+c)]/2} (I),
**R¹ₐSiO**_{(4-a)/2} (II),
bei dem (Meth)acryloyl-funktionalisierte Chlorsilane der allgemeinen Formel IV
**R²_{b}X_{c}SiCl**_{[4-(b+c)]} (IV)
mit Hydroxy-funktionalisierten Organosiliciumverbindungen umgesetzt werden,
wobei **R¹, R², X**, **a**, **b** und **c** die Bedeutungen gemäß einem oder mehreren der Ansprüche 1 bis 4 aufweisen.

6. Verfahren zur Herstellung der (Meth)acrylatfunktionalisierten Chlorsilane der allgemeinen Formel IV gemäß Anspruch 5
**R²_{b}X_{c}SiCl**_{[4-(b+c)]} (IV),
bei dem (Meth)acryloyl-funktionalisierte Alkohole der allgemeinen Formel V
**HO-C(R³R⁴)-R⁵⁻O-(C=O)-CR⁶=CH₂** (V)
mit Chlorsilanen der allgemeinen Formel VI
**R²_{b}SiCl**_{[4-b]} (VI)
umgesetzt werden,
wobei **R², R³**, **R⁴**, **R⁵, R⁶, X**, **b** und **c** die Bedeutungen gemäß einem oder mehreren der Ansprüche 1 bis 4 aufweisen.

7. (Meth)acryloyl-funktionalisierte Chlorsilane der allgemeinen Formel IV
**R²_{b}X_{c}SiCl**_{[4-(b+c)]} (IV)
wobei **R², X**, **b** und **c** die Bedeutungen gemäß einem oder mehreren der Ansprüche 1 bis 4 aufweisen.

## Claims

1. (Meth)acrylate-functional organosilicon compounds M in which an oxygen atom connects the (meth)acrylate group to the silicon of the organosilicon compound, wherein the carbon atom bonded to the oxygen atom bears at least one further moiety bonded via carbon, with the proviso that in the presence of just one further moiety, said moiety contains more than one carbon atom,
constructed of at least one unit of general formula I and at least one unit of general formula II
**R²_{b}X_{c}SiO**_{[4-(b+c)]/2} (I),
**R¹ₐSiO**_{(4-a)/2} (II),
where
**R¹** and **R²** are each independently hydrogen atoms or C₁-C₂₀ hydrocarbon or C₁-C₁₅ hydrocarbonoxy moieties in which one or more mutually nonadjacent methylene units may each be replaced by -O-, -CO-, -COO-,-OCO- or -OCOO or **NR^{x}** groups and which are unsubstituted or substituted with substituents selected from -CN, N**R^{x}**₂, COOH, COO**R^{x}**, -halogen,-acryloyl, -methacryloyl, -epoxy, -OH and -CON**R^{x}**₂,
**R^{x}** is hydrogen or a C₁-C₁₀ hydrocarbon moiety unsubstituted or substituted with substituents selected from -CN and halogen,
**X** is an oxygen-bonded moiety of general formula (III)
**O-C(R³R⁴)-R⁵-O-(C=O)-CR⁶=CH₂)** (III)
**R³** and **R⁴** are each independently hydrogen or C₁-C₂₀ hydrocarbon moieties in which one or more mutually nonadjacent methylene units may each be replaced by O-(C=O)-C**R**⁶=CH₂, -O-, -CO-, -COO-, -OCO- or -OCOO- or **NR^{x}** groups, with the proviso that when **R³** is hydrogen, **R⁴** contains at least two carbon atoms,
**R⁵** is a divalent C₁-C₂₀ hydrocarbon moiety in which one or more mutually nonadjacent methylene units may each be replaced by -O-, -CO-, -COO-, -OCO- or-OCOO- or **NR^{x}** groups,
**R⁶** is hydrogen or unbranched, branched or cyclic saturated or unsaturated alkyl of 1 to 12 carbon atoms or aryl or aralkyl, wherein individual nonadjacent methylene units may be replaced by nitrogen atoms or oxygen atoms,
**a** is 0, 1, 2 or 3,
**b** is 0, 1 or 2,
**c** is 1, 2 or 3, and
**b+c** is 1, 2 or 3.

2. (Meth)acrylate-functional organosilicon compounds M according to Claim 2 wherein **R¹** and **R²** are each straight-chain, branched or cyclic C₁-C₆ alkyl or alkoxy moieties, or phenyl or vinyl moieties.

3. (Meth)acrylate-functional organosilicon compounds M according to either or both of Claims 1 and 2 wherein **R³** and **R⁴** are each selected from methyl, ethyl and (meth)acryloyloxymethyl.

4. (Meth)acrylate-functional organosilicon compounds M according to one or more of Claims 1 to 3 wherein **R⁵** is a divalent C-bonded C₁-C₆ hydrocarbon moiety wherein nonadjacent methylene groups may be replaced by oxygens.

5. Process for preparing (meth)acrylate-functionalized organosilicon compounds M as defined in one or more of Claims 1 to 4, constructed of at least one unit of general formula I and no or at least one unit of general formula II
**R²_{b}X_{c}SiO**_{[4-(b+c)]/2} (I),
**R¹ₐSiO**_{(4-a)/2} (II),
which process comprises reacting (meth)acryloyl-functionalized chlorosilanes of general formula IV
**R²_{b}X_{c}SiCl**_{[4-(b+c)]} (IV)
with hydroxyl-functionalized organosilicon compounds,
wherein **R¹, R², X**, **a**, **b** and **c** are each as defined in one or more of Claims 1 to 4.

6. Process for preparing the (meth)acrylate-functionalized chlorosilanes of general formula IV as defined in Claim 5
**R²_{b}X_{c}SiCl**_{[4}-_{(b+c)]} (IV),
which process comprises reacting (meth)acryloyl-functionalized alcohols of general formula V
**HO-C(R³R⁴)-R⁵-O**-**(C=O)-CR**⁶=**CH₂** (V)
with chlorosilanes of general formula VI
**R²_{b}SiCl**_{[4-b]} (VI)
wherein **R², R**³, **R⁴**, **R⁵, R⁶, X**, **b** and **c** are each as defined in one or more of Claims 1 to 4.

7. (Meth)acryloyl-functionalized chlorosilanes of general formula IV
**R²_{b}X_{c}SiCl**_{[4-(b+c)]} (IV)
wherein **R², X**, **b** and **c** are each as defined in one or more of Claims 1 to 4.

## Revendications

1. Composés d'organosilicium à fonction (méth)acrylate M, dans lesquels le groupe (méth)acrylate est relié par un atome d'oxygène avec le silicium du composé d'organosilicium, l'atome de carbone relié à l'atome d'oxygène portant au moins un radical supplémentaire relié par un carbone, à condition qu'en cas de présence d'un seul radical supplémentaire, celui-ci contienne plus d'un atome de carbone,
constitués par au moins une unité de la formule générale I et au moins une unité de la formule générale II :
**R²_{b}X_{c}SiO**_{[4-(b+c)]/2} (I)
**R¹ₐSiO**_{(4-a)/2} (II)
dans lesquelles
**R¹** et **R²** signifient indépendamment l'un de l'autre des atomes d'hydrogène ou des radicaux hydrocarbonés en C₁-C₂₀ ou oxy-hydrocarbonés en C₁-C₁₅ non substitués ou substitués avec des substituants qui sont choisis parmi -CN, N**R^{x}**₂, COOH, COO**R^{x}**, halogène, acryle, méthacryle, époxy, -OH et -CON**R^{x}**₂, dans lesquels une ou plusieurs unités méthylène non voisines les unes des autres peuvent être remplacées par des groupes -O-, -CO-, - COO-, -OCO- ou -OCOO- ou N**R^{x}**,
**R^{x}** signifie l'hydrogène ou un radical hydrocarboné en C₁-C₁₀ non substitué ou substitué avec des substituants qui sont choisis parmi -CN et halogène,
**X** signifie un radical de la formule générale (III), relié par un oxygène :
**O-C(R³R⁴)-R⁵-O-(C=O)-CR⁶=CH₂)** (III)
**R³** et **R⁴** signifient indépendamment l'un de l'autre l'hydrogène ou des radicaux hydrocarbonés en C₁-C₂₀, dans lesquels une ou plusieurs unités méthylène non voisines les unes des autres peuvent être remplacées par des groupes O-(C=O)-C**R**⁶=CH₂, -O-, -CO-, -COO-, -OCO- ou -OCOO- ou N**R^{x}**, à condition que lorsque **R³** signifie l'hydrogène, **R⁴** contienne au moins deux atomes de carbone,
**R⁵** signifie un radical hydrocarboné en C₁-C₂₀ bivalent, dans lequel une ou plusieurs unités méthylène non voisines les unes des autres peuvent être remplacées par des groupes -O-, -CO-, -COO-, -OCO- ou - OCOO- ou N**R^{x}**,
**R⁶** signifie l'hydrogène ou un groupe alkyle non ramifié, ramifié ou cyclique, saturé ou insaturé, de 1 à 12 atomes C, ou un groupe aryle ou un groupe aralkyle, des unités méthylènes non voisines individuelles pouvant être remplacées par des atomes d'azote ou des atomes d'oxygène,
**a** signifie les valeurs 0, 1, 2 ou 3,
**b** signifie les valeurs 0, 1 ou 2,
**c** signifie les valeurs 1, 2 ou 3, et
**b+c** signifie 1, 2 ou 3.

2. Composés d'organosilicium à fonction (méth)acrylate M selon la revendication 1, dans lesquels **R¹** et **R²** sont des radicaux alkyle ou alcoxy en C₁-C₆ linéaires, ramifiés ou cycliques, ou des radicaux phényle ou vinyle.

3. Composés d'organosilicium à fonction (méth)acrylate M selon une ou plusieurs des revendications 1 ou 2, dans lesquels **R³** et **R⁴** sont choisis parmi méthyle, éthyle et (méth)acryloxyméthyle.

4. Composés d'organosilicium à fonction (méth)acrylate M selon une ou plusieurs des revendications 1 à 3, dans lesquels **R⁵** signifie un radical hydrocarboné en C₁-C₆ bivalent relié à C, dans lequel des groupes méthylène non voisins peuvent être remplacés par des oxygènes.

5. Procédé de fabrication de composés d'organosilicium à fonctionnalisation (méth)acrylate M selon une ou plusieurs des revendications 1 à 4, constitués par au moins une unité de la formule générale I et aucune ou au moins une unité de la formule générale II :
**R²_{b}X_{c}SiO**_{[4-(b+c)**]**/2} (I),
**R¹ₐSiO**₍₄₋ₐ)_{/2} (II)
dans lequel des chlorosilanes à fonctionnalsation (méth)acryloyle de la formule générale IV :
**R²_{b}X_{c}SiCl**_{[4-(b+c)]} (IV)
sont mis en réaction avec des composés d'organosilicium à fonctionnalisation hydroxy,
**R¹, R², X, a, b** et **c** ayant les significations selon une ou plusieurs des revendications 1 à 4.

6. Procédé de fabrication des chlorosilanes à fonctionnalisation (méth)acrylate de la formule générale IV selon la revendication 5 :
**R²_{b}X_{c}SiCl**_{[4-(b+c)]} (IV)
dans lequel des alcools à fonctionnalisation (méth)acryloyle de la formule générale V :
**HO-C(R³R⁴)-R⁵-O-(C=O)-CR⁶=CH²** (V)
sont mis en réaction avec des chlorosilanes de la formule générale VI:
**R²_{b}SiCl**_{[4-b]} (VI)
**R²**, **R³, R⁴**, **R⁵, R⁶, X**, **b** et **c** ayant les significations selon une ou plusieurs des revendications 1 à 4.

7. Chlorosilanes à fonctionnalisation (méth)acryloyle de la formule générale IV :
**R**²**_{b}X_{c}SiCl**_{[4-(b+c)]} (IV)
dans laquelle **R², X, b** et **c** ont les significations selon une ou plusieurs des revendications 1 à 4.
